# EUROPÄISCHE PATENTSCHRIFT

(11) **EP 4 458 615 B1**
(45) Veröffentlichungstag und Bekanntmachung des Hinweises auf die Patenterteilung: **29.07.2026**
(21) Anmeldenummer: 24174093.5
(22) Anmeldetag: 03.05.2024
(51) Int. Cl.: B60R 9/10

(54) **LASTENHECKTRÄGER MIT GASDRUCKFEDERUNTERSTÜTZUNG UND SYSTEM AUS DEM LASTENHECKTRÄGER UND EINER FUNKFERNBEDIENUNG**
LOAD TAIL BEAM WITH GAS COMPRESSION SPRING SUPPORT AND SYSTEM OF LOAD TAIL BEAM AND RADIO REMOTE CONTROL
SUPPORT ARRIÈRE DE CHARGE AVEC SUPPORT DE RESSORT À GAZ ET SYSTÈME COMPOSÉ DU SUPPORT ARRIÈRE DE CHARGE ET D'UNE TÉLÉCOMMANDE RADIO

(30) Priorität: 05.05.2023 DE 202023102452 U
(43) Veröffentlichungstag der Anmeldung: 06.11.2024
(73) Patentinhaber: mft transport systems GmbH, 74532 Ilshofen-Großallmerspann (DE)
(72) Erfinder: BOHN, Gloria, 74532 Ilshofen (DE)
(74) Vertreter: Winter, Brandl - Partnerschaft mbB

(56) Entgegenhaltungen:
- EP-A1- 2 457 777
- AU-A1- 2022 206 754
- DE-A1- 19 541 331
- US-A1- 2011 057 008
- US-A1- 2017 320 447
- US-A1- 2020 406 830
- US-A1- 2023 211 736
- US-B1- 11 584 306
- US-B1- 6 655 895
- US-B1- 7 111 765

## Beschreibung

### Technisches Gebiet

Die vorliegende Offenbarung betrifft einen Lastenheckträger zur Kopplung mit einer Kugelkopf-Anhängerkupplung eines Fahrzeugs und ein System aus dem Lastenheckträger und einer Funkfernbedienung.

### Hintergrund der Erfindung

Lastenheckträger dienen zum Transport von Lasten außerhalb eines Kraftfahrzeugs, beispielsweise außerhalb eines Personenkraftwagens. Lastenheckträger werden dabei insbesondere zum Transport von Transportgut, insbesondere von Fahrrädern, verwendet. Lastenheckträger sind üblicherweise starre Rahmengestelle, die als Lastauflager dienen und eine (trägerseitige) Kupplung aufweisen, die mit einer fahrzeugseitigen Anhängerkupplung gekoppelt werden kann. Üblicherweise ist die fahrzeugseitige Kupplung als Kugelkopf-Anhängerkupplung ausgeführt, die einen Kupplungshals und einen Kupplungskopf aufweist. Zum Koppeln des Lastenheckträgers mit der fahrzeugseitigen Kupplung in einen Kupplungszustand wird das Rahmengestell des Lastenheckträgers bei geöffneter trägerseitiger Kupplung auf einen Kugelkopf der fahrzeugseitigen Kupplung aufgesetzt und dann die trägerseitige Kupplung um den Kugelkopf der fahrzeugseitigen Kupplung geschlossen. Relevant ist hierbei, dass eine ausreichende Flächenkraft zwischen der fahrzeugseitigen und der trägerseitigen Kupplung erzeugt wird, damit der Lastenheckträger stabil Lastkräfte in die fahrzeugseitige Anhängerkupplung, insbesondere während der Fahrt des Fahrzeugs, einleiten kann.

Alternativ sind andere Befestigungslösungen des Lastenheckträgers an dem Fahrzeug gleichwertig vorstellbar. So existieren auf dem Markt auch Befestigungslösungen, welche ohne Flächenkraft auskommen.

Um eine Funktionalität und Anwenderfreundlichkeit derartiger Lastenheckträger zu verbessern, sind Lastenheckträger bekannt, welche mit einer Abklappfunktion bzw. einer Absenkfunktionalität ausgebildet sind. Eine derartige Abklappfunktion ermöglicht es, auf dem Lastenheckträger transportiertes Transportgut in einer Richtung weg von dem Kraftfahrzeug zu klappen/ zu bewegen, um einen Kofferraum des Kraftfahrzeugs zugänglich zu machen, ohne dass Transportgut von dem Lastenheckträger zu demontieren/ zu lösen.

Insbesondere durch die immer weitere Verbreitung von Pedelecs und E- Bikes hat sich ein Gewicht, welches auf Lastenheckträgern transportiert wird, erheblich erhöht. So wiegt ein einzelnes Pedelec bereits ca. 30 kg, wohingegen ein herkömmliches Rennrad deutlich unter 10 kg wiegt. Ein derartig erhöhtes Gewicht der einzelnen Fahrräder und damit ein erhöhtes Gesamtgewicht des Transportguts schränkt eine Funktionalität und eine Anwendbarkeit der Abklappfunktion erheblich ein.

Einerseits ist die gesamte Gewichtskraft des auf dem Lastenheckträger montierten Transportguts durch einen Bediener bei einem Absenken/ Abklappen durch Muskelkraft abzubremsen. Insbesondere ist hier eine Beschleunigung/ eine wirkende Kraft kurz vor Erreichen einer Endlage der Abklappung sehr hoch, wobei gerade in dieser Position ein Festhalten/ Absenken des Transportguts durch die Nähe zum Boden besonderes unergonomisch für den Bediener ist. Andererseits ist eine aufzubringende Kraft, um das abgeklappte Transportgut/ das zumindest eine abgeklappte Fahrrad wieder aufzurichten sehr hoch. Diese Problematik erhöht sich nochmals deutlich, wenn mehrere Fahrräder oder gar mehrere Pedelecs und E- Bikes auf dem Lastenheckträger montiert sind.

### Stand der Technik

Im Stand der Technik gibt es bereits Lösungen, die Abklapp- bzw. Absenkfunktionalität mit einem Dämpfer oder einer Hilfsmechanik, beispielsweise einem unterstützenden Elektromotor, auszurüsten.

So offenbart beispielsweise die DE 43 30 001 A1 einen Heckträger zum Transport sperriger Lasten auf einem Kraftwagen, insbesondere zum Transport eines Fahrrads. Eine Hochklappbewegung eines Tragrahmens des Heckträgers wird zur Entlastung der Bedienperson durch einen Getriebemotor oder eine Gasfeder unterstützt.

Da das Gewicht der Last und damit eine nötige Unterstützungskraft/ Unterstützungsleistung, welche von dem Motor oder der Gasfeder geleistet werden muss, jedoch in erheblichem Maße von dem Gewicht des Transportguts und damit einer Art und einer Anzahl der zu transportierenden Fahrräder abhängt, ist die Absenkfunktionalität bei dem Lastenheckträger lediglich für einen einzelnen, durch den Hersteller vorbestimmten Beladungszustand ausgelegt und geeignet.

Bei einem Beladungszustand, welcher den vorbestimmten Beladungszustand übersteigt, kann es zu einer Fehlfunktion der Absenkfunktionalität kommen, was Beschädigungen an dem Transportgut oder dem Fahrzeug zur Folge haben kann, insbesondere, wenn sich ein Bediener auf die Absenkfunktionalität verlässt. Hingegen kann bei einem Beladungszustand, welcher den vorbestimmten Beladungszustand unterschreitet, die Absenkfunktionalität erheblich eingeschränkt sein, da die Gewichtskraft des Transportguts nicht ausreicht, die Absenkfunktionalität bestimmungsgemäß auszulösen.

US 2011 / 057 008 A1 offenbart einen Lastenheckträger nach dem Oberbegriff von Anspruch 1, für ein Fahrzeug mit einem Basiselement zum Kuppeln an ein Fahrzeug und ein Trägerelement zum Aufnehmen einer Last in Form von Fahrrädern, wobei das Basiselement und das Trägerelement schwenkbar um einen Drehpunkt miteinander verbunden sind. Ein Unterstützungselement ist in Form einer Gasfeder zwischen dem Basiselement und dem Trägerelement ausgebildet. Die Unterstützungswirkung kann zwischen einem beladenen Zustand und einem unbeladenen Zustand verstellt/ variiert werden.

DE 195 41 331 A1 offenbart ebenfalls einen Lastenheckträger zur Aufnahme von Lasten (Fahrrädern) an einem Fahrzeugheck mit einem Basiselement und einem Trägerelement. Weiterhin offenbart ist ein einstellbares Lastreduktionsstück, welches vorgesehen und ausgebildet ist, entsprechend einer Beladung eingestellt zu werden.

US 2020 / 406 830 A1 offenbart ebenfalls einen Lastenheckträger für ein Fahrzeug. Es werden verschiedene Arten von Unterstützungselementen zur Unterstützung einer Bewegung zwischen einem Basiselement und einem Trägerelement des Lastenträgers offenbart.

US 11 584 306 B1 offenbart einen besonders robusten Lastenträger für schwere Fahrräder wie E-Bikes.

### Kurzbeschreibung der Offenbarung

Aufgabe der vorliegenden Offenbarung ist es daher, die Nachteile aus dem Stand der Technik zu beheben oder zumindest zu reduzieren.

Konkret ist es Aufgabe der vorliegenden Offenbarung, einen Lastenheckträger bereitzustellen, der sowohl ein sicheres und komfortables Absenken/ Abklappen einer leichten Last als auch ein sicheres und komfortables Absenken/ Abklappen einer schweren Last ermöglicht.

Diese Aufgabe wird gelöst durch einen Lastenheckträger gemäß dem unabhängigen Anspruch 1 und ein System nach dem nebengeordneten Anspruch. Vorteilhafte Weiterbildungen des Lastenheckträgers sind in den Unteransprüchen und nachfolgend erläutert.

Konkret wird die Aufgabe gelöst durch einen Lastenheckträger mit einem Basiselement, einer zum Koppeln mit einer Kugelkopf-Anhängerkupplung eines Fahrzeugs vorgesehenen Kupplung, welche starr an dem Basiselement ausgebildet ist, und einem Trägerelement zum Aufnehmen zumindest einer Last, vorzugsweise eines Fahrrads, wobei das Trägerelement und das Basiselement schwenkbar um einen Drehpunkt miteinander verbunden sind und zwischen dem Basiselement und dem Trägerelement zumindest ein Unterstützungselement ausgebildet ist, um eine Bewegung zwischen dem Basiselement und dem Trägerelement zu unterstützen. Der Lastenheckträger weist weiterhin eine Unterstützungskraftveränderungsvorrichtung auf, welche vorgesehen und ausgebildet ist, eine Unterstützungswirkung des Unterstützungselements auf die Bewegung zwischen dem Basiselement und dem Trägerelement zu verändern.

**In** anderen Worten wird die Aufgabe gelöst durch den Lastenheckträger, der vorgesehen und ausgebildet ist, an der Kugelkopf-Anhängerkupplung des Fahrzeugs reversibel durch einen Bediener fixiert zu werden. Bei dem Lastenheckträger handelt es sich bevorzugt um einen Fahrradheckträger, der vorgesehen und ausgebildet ist, eine Anzahl an Fahrrädern an dem Fahrzeugheck sicher zu transportieren. Der Lastenheckträger weist das Basiselement auf, welches als ein tragendes Grundelement des Rahmens des Lastenheckträgers ausgebildet ist. An dem Basiselement ist die Kupplung ausgebildet, form- und kraftschlüssig mit der Kugelkopf-Anhängerkupplung des Fahrzeugs verbunden zu werden. Die Kupplung ist bevorzugt fest mit dem Basiselement verbunden oder mit diesem einstückig ausgebildet.

Der Lastenheckträger weist weiterhin das Trägerelement auf, das vorgesehen und ausgebildet ist, die Last, hier vorzugsweise das zumindest eine Fahrrad, zu tragen und sicher zu fixieren. Hierfür kann das Trägerelement auf die zu transportierende Last abgestimmte Aufnahmen/ Rastelemente aufweisen. Das Trägerelement und das Basiselement sind derart miteinander verbunden, dass das Trägerelement in Relation zu dem Basiselement verschwenkt/ abgeklappt werden kann. Insbesondere kann das Trägerelement aus einer Transportposition in eine Zugangsposition geschwenkt werden. Bei der Transportposition handelt es sich um eine Position, in welcher die Last transportiert wird. Bei der Zugangsposition handelt es sich um eine Position, in welcher der Zugang zu einem Laderaum des Fahrzeugs erleichtert ist. **In** der Zugangsposition kann das Trägerelement in einem Winkel, vorzugsweise in einem Winkel zwischen 10 ° und 90 ° von dem Fahrzeug weggeklappt sein.

Das Trägerelement und das Basiselement sind in dem Drehpunkt vorzugsweise mittels eines Lagers, einer Achse, einem Scharnier oder dergleichen miteinander verbunden.

Zwischen dem Trägerelement und dem Basiselement ist weiterhin das Unterstützungselement ausgebildet. Das Unterstützungselement ist vorgesehen und ausgebildet, die Schwenkbewegung des Trägerelements relativ zu dem Basiselement zu unterstützen. Unter Unterstützen ist zu verstehen, dass die von einem Bediener initiierte Schwenkbewegung derart gefördert wird, dass eine von dem Bediener aufzubringende Bedienkraft reduziert ist und die Schwenkbewegung in einem definierten/ vorbestimmten Geschwindigkeitsbereich erfolgt.

Weiterhin ist an dem Lastenheckträger die Unterstützungskraftveränderungsvorrichtung ausgebildet, welche dem Bediener die Möglichkeit gibt, die Unterstützungswirkung, welche von dem Unterstützungselement auf die Schwenkbewegung ausgeübt wird, zielgerichtet/ definiert zu verändern.

Durch eine derartige Ausbildung des Lastenheckträgers kann dem Bediener die Möglichkeit gegeben werden, die Unterstützungswirkung auf das Gewicht der Last zu adaptieren. Somit kann sichergestellt werden, dass ein sicheres und komfortables Absenken/ Abklappen einer leichten Last als auch einer schweren Last durch den Lastenheckträger ermöglicht ist.

In einem ersten Aspekt wirkt die Unterstützungskraftveränderungsvorrichtung um einen Angriffspunkt des Unterstützungselements an dem Trägerelement verändern/ manipulieren/ verschieben.

In anderen Worten ist das Unterstützungselement derart ausgebildet , dass es an einem ersten Angriffspunkt mit dem Basiselement und einem zweiten Angriffspunkt mit dem Trägerelement verbunden ist bzw. an dem ersten Angriffspunkt und einem zweiten Angriffspunkt an dem Trägerelement bzw. an dem Basiselement wirkt. Die Unterstützungskraftveränderungsvorrichtung ist ausgebildet , den zweiten Angriffspunkt des Unterstützungselements in einer Positionierung und/ oder in einem Winkel zu verändern.

Eine derartige Veränderung des Angriffspunkts verändert einen Hebelarm, mit welchem das Unterstützungselement auf das Trägerelement wirkt, sodass bei einer konstanten Unterstützungskraft des Unterstützungselements eine variable Unterstützungswirkung auf die Schwenkbewegung zwischen dem Basiselement und dem Trägerelement ermöglicht werden kann. Auf diese Weise kann als Unterstützungselement ein Element mit statischer Unterstützungskraft/ Federkraft/ Dämpfungskraft gewählt werden, was Herstellungskosten des Lastenheckträgers reduziert und das Unterstützungselement gleichzeitig robuster gegen Umwelteinflüsse macht.

In anderen Worten vergrößert oder verkleinert die Unterstützungskraftveränderungsvorrichtung den Abstand zwischen dem Angriffspunkt und dem Drehpunkt . Durch eine derartige Veränderung des Abstands kann der Hebelarm, welcher dem Abstand zwischen dem Angriffspunkt und dem Drehpunkt entspricht, zuverlässig verändert werden.

Die Unterstützungskraftveränderungsvorrichtung verändert den Abstand über eine Handhebelvorrichtung in drei Stufen, wobei die Stufen unterschiedlichen Beladungszuständen des Trägerelements entsprechen.

In anderen Worten ist die Unterstützungskraftveränderungsvorrichtung mit der Handhebelvorrichtung ausgebildet, welche vorgesehen und ausgebildet ist, den Angriffspunkt des Unterstützungselements durch Klappen eines schwenkbaren

Elements der Handhebelvorrichtung an dem Trägerelement in seiner Position zu verändern. Das schwenkbare Element ist in eine erste plane Position, eine aufgerichtete Position und eine zweite plane Position bringbar, wobei jede der Positionen in einem unterschiedlichen Hebelarm und damit einer unterschiedlichen Unterstützungswirkung resultiert. Jede der Positionen des schwenkbaren Elements kann dabei einem Beladungszustand entsprechen. Beispielsweise kann die erste plane Position des schwenkbaren Elements einem Beladungszustand mit einem Fahrrad, die aufgerichtete Position des schwenkbaren Elements einem Beladungszustand mit zwei Fahrrädern und die zweite plane Position des schwenkbaren Elements einem Beladungszustand mit drei Fahrrädern entsprechen.

Das schwenkbare Element kann im Wesentlichen als ein Spacer/ ein Abstandselement mit einer Anzahl an Raststufen ausgebildet sein.

Durch eine derartige Ausbildung mit einer Handhebelvorrichtung mit mehreren Stufen kann durch den Bediener der aktuelle Beladungszustand des Lastenheckträgers unkompliziert und schnell eingestellt werden.

In einem weiteren Aspekt kann die Handhebelvorrichtung mit Piktogrammen ausgebildet sein, welche jeder der Stufen einen Beladungszustand zuordnen.

Durch eine Ausbildung mit Piktogrammen kann der Bediener jederzeit sicher die Unterstützungswirkung über die Unterstützungskraftveränderungsvorrichtung einstellen, ohne sich beispielsweise Bedienungsanleitung rückversichern zu müssen welche der Stufen für welchen Beladungszustand geeignet ist.

Bei dem Piktogramm kann es sich beispielsweise um eine Zahl handeln, welche die Anzahl an zu transportierenden Fahrrädern angibt. Alternativ kann das Piktogramm Fahrräder darstellen, welche gruppiert in einer Anzahl bei der jeweiligen Stufe dargestellt sind.

In einem weiteren Aspekt kann das Unterstützungselement eine Gasdruckfeder sein.

In anderen Worten kann das Unterstützungselement als ein hydropneumatisches Verstellelement mit einem Druckrohr und einem Kolben ausgebildet sein. Das Druckrohr kann an dem Basiselement fixiert sein. Der Kolben kann, beispielsweise über eine Kolbenstange, an dem Trägerelement fixiert sein. Selbstverständlich kann alternativ auch das Druckrohr an dem Trägerelement und der Kolben an dem Basiselement fixiert sein. Eine Kraft, mit der der Kolben gegen das Druckrohr verfährt richtet sich nach einer Menge an komprimiertem Gas mit welcher ein Druckraum in dem Druckrohr befüllt ist. Bei dem Gas handelt es sich zumeist um Stickstoff. In anderen Worten richtet sich die Kraft nach dem voreingestellten Innendruck in der Gasdruckfeder.

Durch eine Ausbildung des Unterstützungselements als eine Gasdruckfeder kann eine hohe Leistungsdichte erzielt werden. Weiterhin sind Gasdruckfedern wartungsarm und relativ witterungsunanfällig.

In einer alternativen Ausführungsform kann das Unterstützungselement als eine herkömmliche Druckfeder aus Stahl und/ oder als ein herkömmliches Feder-Dämpfer-Paket mit der herkömmlichen Druckfeder und einem Schwingungsdämpfer ausgebildet sein.

In einem weiteren Aspekt kann es sich bei dem Lastenheckträger um einen Fahrradheckträger handeln und die Unterstützungswirkung des Unterstützungselements in Abhängigkeit von einer Anzahl an auf dem Trägerelement des Fahrradheckträgers aufgenommenen Fahrrädern über die Unterstützungskraftveränderungsvorrichtung einstellbar sein.

In einer weiteren Ausführungsform ist das Unterstützungselement mit einem oder als ein aktiver Antrieb, beispielsweise mit einem oder als ein (Elektro-) Motor ausgebildet, wie dies aus dem Stand der Technik bekannt ist. Anders ausgedrückt kann der Lastenheckträger den Motor aufweisen, wobei der Motor vorgesehen und ausgebildet ist, das Trägerelement relativ zu dem Basiselement zu bewegen. Die Offenbarung betrifft entsprechend auch einen Lastenheckträger mit einem Unterstützungselement, welches mit einem oder als ein aktiver Antrieb, beispielsweise mit einem oder als ein (Elektro-) Motor, ausgebildet ist, wobei der Motor vorgesehen und ausgebildet ist, das Trägerelement relativ zu dem Basiselement zu bewegen.

In diesem Fall kann die Unterstützungskraftveränderungsvorrichtung als ein, vorzugsweise schaltbares, Getriebe ausgebildet sein. Anders ausgedrückt kann über das schaltbare Getriebe die Unterstützungswirkung an die Last auf dem Trägerelement angepasst werden, indem ein Übersetzungsverhältnis durch Schalten des Getriebes verändert wird.

Alternativ oder zusätzlich kann die Unterstützungskraftveränderungsvorrichtung als eine oder mit einer Steuerungselektronik ausgebildet sein oder in der Steuerungselektronik implementiert sein, welche das Unterstützungselement mit unterschiedlichen Strömen und/ oder Spannungen beaufschlagt.

In einer Ausführungsform kann der Lastenheckträger eine Ansteuerungsvorrichtung aufweisen, welche durch ein, vorzugsweise externes, Abklappsignal ansteuerbar ist. Die Ansteuerungsvorrichtung kann vorgesehen und ausgebildet sein, basierend auf dem Abklappsignal den Lastenheckträger abzuklappen. Unter dem Abklappen des Lastenheckträgers ist selbstverständlich auch hier das Abklappen des Trägerelements relativ zu dem Basiselement zu verstehen. Die Offenbarung betrifft entsprechend auch einen Lastenheckträger mit einer Ansteuerungsvorrichtung, welche durch ein Abklappsignal ansteuerbar ist.

Bei dem Abklappsignal kann es sich um ein Signal einer Funkfernbedienung handeln. Insbesondere kann das Abklappsignal ein Signal sein, das (auch) ein, vorzugsweise automatisches, Öffnen der Heckklappe des Fahrzeugs verursacht. Es kann selbstverständlich jedoch auch ein dediziertes Signal sein.

**In** anderen Worten kann die Ansteuerungsvorrichtung das Abklappsignal, welches von der Funkfernbedienung emittiert wird, erfassen und den Abklappvorgang des Lastenheckträgers starten, sodass eine Kollision zwischen der öffnenden Heckklappe des Fahrzeugs und dem Lastenheckträger verhindert werden kann.

Zum Empfangen des Abklappsignals kann die Ansteuerungsvorrichtung mit einer, vorzugsweise drahtlosen, Empfangseinheit, beispielsweise in Form einer Antenne, ausgebildet sein.

Optional kann ein Verzögerungselement implementiert sein, sodass der Abklappvorgang des Lastenheckträgers und das Öffnen der Heckklappe sequenziell oder zumindest zeitversetzt ablaufen.

Anders ausgedrückt kann das Öffnen der Heckklappe so lange verzögert werden, bis der Lastenheckträger vollständig oder beinahe vollständig abgeklappt ist.

Alternativ kann das Abklappsignal auch ein Signal sein, welches ein Öffnen der Heckklappe des Fahrzeugs anzeigt.

Weiterhin alternativ kann das Fahrzeug bzw. ein Steuergerät des Fahrzeugs das Abklappsignal emittieren, wenn das Fahrzeug das Signal zum Öffnen der Heckklappe empfängt.

**In** einer weiteren alternativen Ausführungsform kann der Lastenheckträger Sensorik beinhalten, welche vorgesehen und ausgebildet ist, das Öffnen der Heckklappe des Fahrzeugs zu erkennen und die Ansteuerungsvorrichtung kann ausgebildet sein, daraufhin den Abklappvorgang des Lastenheckträgers zu starten. Bei der Sensorik kann es sich beispielsweise um einen Abstandssensor, einen Annäherungssensor, einen Magnetsensor/ Hallsensor oder dergleichen handeln.

Selbstverständlich sind auch Ausführungsformen vorstellbar, in welchen neben dem Abklappsignal auch ein Aufklappsignal von der Ansteuerungsvorrichtung empfangbar ist, welches den Lastenheckträger wieder in die Transportposition fährt, wenn die Heckklappe des Fahrzeugs wieder geschlossen ist. Die technische Umsetzung erfolgt hier entsprechend dem (umgekehrten) Abklappvorgang.

### Kurzbeschreibung der Figuren

Fig. 1 ist eine perspektivische Ansicht eines offenbarungsgemäßen Lastenheckträgers;
Fig. 2 ist eine schematische Darstellung des offenbarungsgemäßen Lastenheckträgers;
Fig. 3 ist eine Seitenansicht des offenbarungsgemäßen Lastenheckträgers;
Fig. 4 ist eine Schnittansicht des offenbarungsgemäßen Lastenheckträgers;
Fig.5 ist eine vergrößerte Darstellung der Schnittansicht des offenbarungsgemäßen Lastenheckträgers;
Fig. 6 ist eine perspektivische Darstellung des offenbarungsgemäßen Lastenheckträgers mit einem Fahrrad; und
Fig. 7 zeigt eine weitere Ausführungsform des offenbarungsgemäßen Lastenheckträgers.

### Beschreibung der Ausführungsformen

Nachstehend werden Ausführungsformen der vorliegenden Offenbarung auf der Basis der zugehörigen Figuren beschrieben.

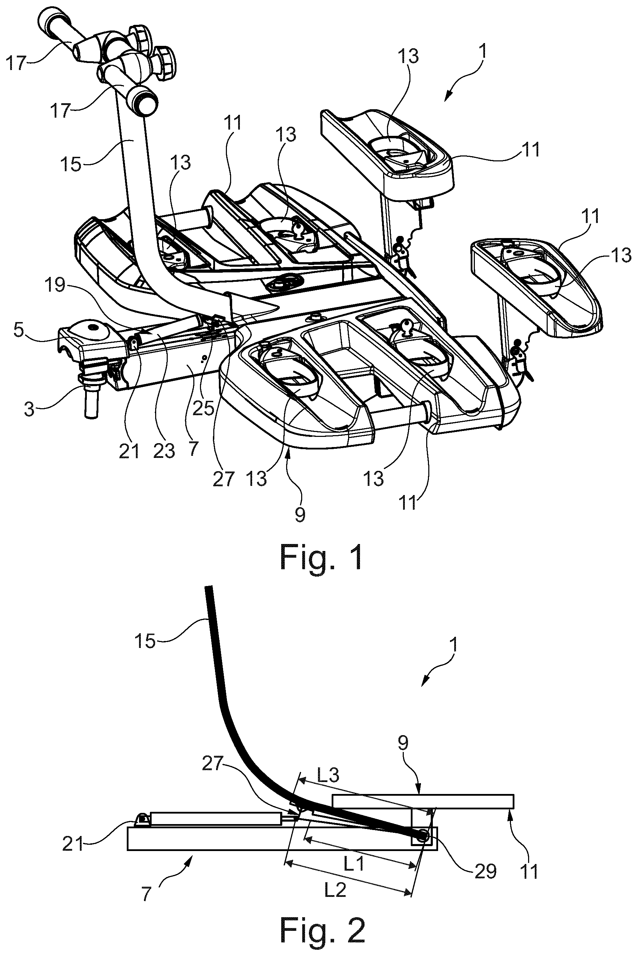

Fig. 1 zeigt einen offenbarungsgemäßen Lastenheckträger 1 in Form eines Fahrradheckträgers in einer Transportposition. Bei der Transportposition handelt es sich um die Position, in welcher sich der Lastenheckträger 1 während eines Transports des Transportguts befindet. Der Lastenheckträger 1 ist vorgesehen und ausgebildet, an einer Kugelkopf-Anhängerkupplung 3 eines Kraftfahrzeugs (nicht dargestellt) mittels einer Kupplung 5 fixiert zu werden. Der Lastenheckträger 1 hat ein Basiselement 7, welches sich im Verwendungszustand (einem Zustand, in welchem der Lastenheckträger 1 mit der Kugelkopf-Anhängerkupplung 3 gekoppelt ist bzw. direkt davor und direkt danach) üblicherweise parallel zu einem Boden in einer Fahrzeuglängsrichtung erstreckt. In dem Verwendungszustand befindet sich der Lastenheckträger 1 in der Transportposition. Das Basiselement 7 ist vorzugsweise in Form einer Strebe oder eines Balkens mit einem im Querschnitt geschlossenen Kastenprofil ausgebildet. Die Kupplung 5 ist vorteilhafterweise an einem dem Fahrzeug zugewandten Axialende des Basiselements 7 angeordnet/ ausgebildet/ fixiert.

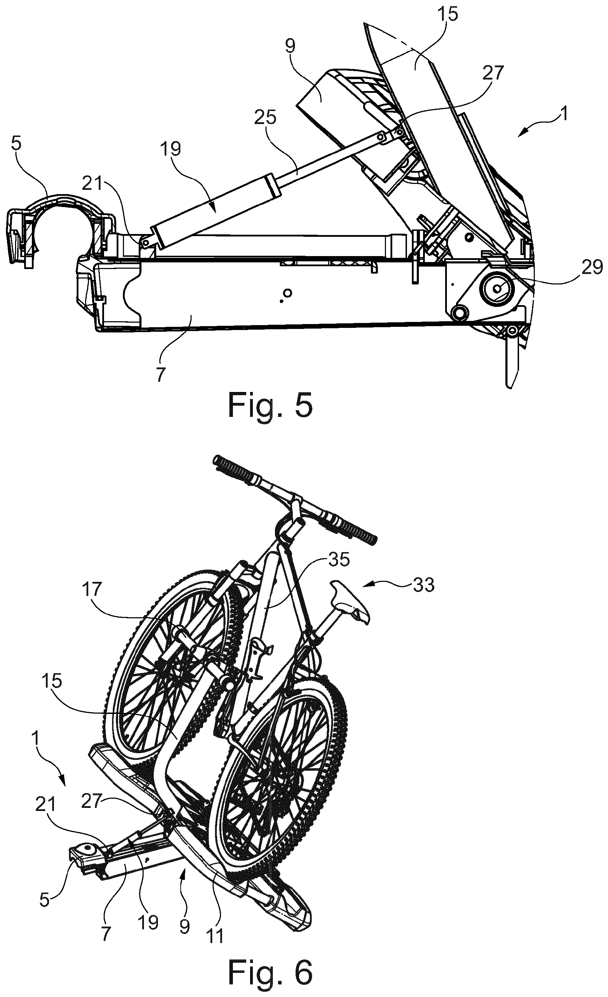

Der Lastenheckträger 1 weist weiter ein Trägerelement/ Transportelement/ Schwenkelement 9 auf, welches mit Auflageplattformen/ Transportflächenflügeln 11 ausgebildet ist. Das Trägerelement 9 kann im Wesentlichen als eine Kunststoffverschalung ausgebildet sein. Die Auflageplattformen 11 sind vorgesehen und ausgebildet, Fahrräder zu tragen. Insbesondere sind die Auflageplattformen 11 ausgebildet, Laufräder der Fahrräder aufzunehmen (vergleiche Fig. 6). Hierfür sind an den Auflageplattformen 11 Rastschlaufen/ Lastsicherungseinheiten 13 ausgebildet, die Laufräder, insbesondere formschlüssig, zu fixieren. Die Rastschlaufen 13 sind abschließbar mit einem Verriegelungsmechanismus ausgebildet.

Weiterhin hat das Trägerelement 9 zur Stabilisierung der Fahrräder eine gebogene Stützstange 15 in Form eines Rohres. Die Stützstange 15 ist im Wesentlichen mittig auf dem Basiselement 7 ausgerichtet und erstreckt sich in einem ersten Abschnitt tangential weg von dem Basiselement 7 gekrümmt nach oben, bevor sich die Stützstange 15 dann in einem zweiten Abschnitt im Wesentlichen gerade und senkrecht von dem Basiselement 7 nach oben weg erstreckt. An der Stützstange 15 sind Stabilisierungsstangen 17 ausgebildet. An der Stabilisierungsstange 17 kann ein Rahmenteil des Fahrrads mittelbar oder unmittelbar fixiert werden. Zwischen dem Basiselement 7 und dem Trägerelement 9 ist weiterhin ein Unterstützungselement in Form einer Gasdruckfeder 19 ausgebildet. Die Gasdruckfeder 19 ist mit einem ersten Endabschnitt, welcher an einem Druckrohr 23 ausgebildet ist in einem ersten Lagerblock 21 in unmittelbarer Nähe der Kupplung 5 an den Basiselement 7 schwenkbar fixiert. Die Gasdruckfeder 19 ist mit einem zweiten Endabschnitt, welcher an einer Kolbenstange 25 der Gasdruckfeder 19 ausgebildet ist mit über ein Schaltelement 27 mit dem Trägerelement 9 verbunden. Konkret ist die Gasdruckfeder 19 über das Schaltelement 27 mit dem ersten Abschnitt der Stützstange 15 verbunden. Das Schaltelement 27 bildet im Wesentlichen die Unterstützungskraftveränderungsvorrichtung aus.

Fig. 2 zeigt zur besseren Veranschaulichung einen schematischen Aufbau des Lastenheckträgers 1. Das Basiselement 7 und das Trägerelement 9 sind über eine Schwenkachse 29 schwenkbar zueinander miteinander verbunden. Die Schwenkachse 29 ist an einem von der Kupplung 5 abgewandten Ende des Basiselements 7 ausgebildet. Das Trägerelement 9 kann relativ zu dem Basiselement 7 verschwenkt/ (ab-) geklappt werden, um einen Zugang/ Zugriff auf einen Kofferraum/ Laderaum des Fahrzeugs zu erleichtern. Die Schwenkbewegung wird durch die Gasdruckfeder 19 unterstützt. Konkret wird eine Abklappbewegung des Trägerelements 9 relativ zu dem Basiselement 7 derart unterstützt, dass die Schwenkbewegung durch die Gasdruckfeder 19 gebremst/gedämpft wird. Weiterhin wird eine Aufklappbewegung/ Hochklappbewegung zurück in die Transportstellung durch die Gasdruckfeder 19 derart unterstützt, dass die Schwenkbewegung durch die Gasdruckfeder 19 beschleunigt/ gefördert wird, sodass der Bediener einen geringeren Kraftaufwand hat. In der schematischen Darstellung sind alle drei möglichen Schaltstellungen des Schaltelements 27 dargestellt, wobei das Schaltelement 27 in der mittleren Schaltposition steht. Die drei Schaltstellungen des Schaltelements 27 unterscheiden sich in einem Abstand/Hebelarm zwischen dem Anlenkungs- bzw. Angriffspunkt der Gasdruckfeder 19 an dem Trägerelement 9 und der Schwenkachse 29. In der ersten Schaltstellung ist ein kleinster Abstand L1 eingestellt. Diese erste Schalterstellung entspricht einer Beladung mit einem Fahrrad. In der zweiten Schaltstellung ist ein mittlerer Abstand L2 eingestellt. Diese zweite Schalterstellung entspricht einer Beladung mit zwei Fahrrädern. In der dritten Schalterstellung ist ein größter Abstand L3 eingestellt diese dritte Schalterstellung entspricht einer Beladung mit drei Fahrrädern. Durch die Veränderung des Hebelarms zwischen den unterschiedlichen Schalterstellungen wird die Unterstützungswirkung der Gasdruckfeder 19 bei konstanten Federdruck der Gasdruckfeder 19 variiert.

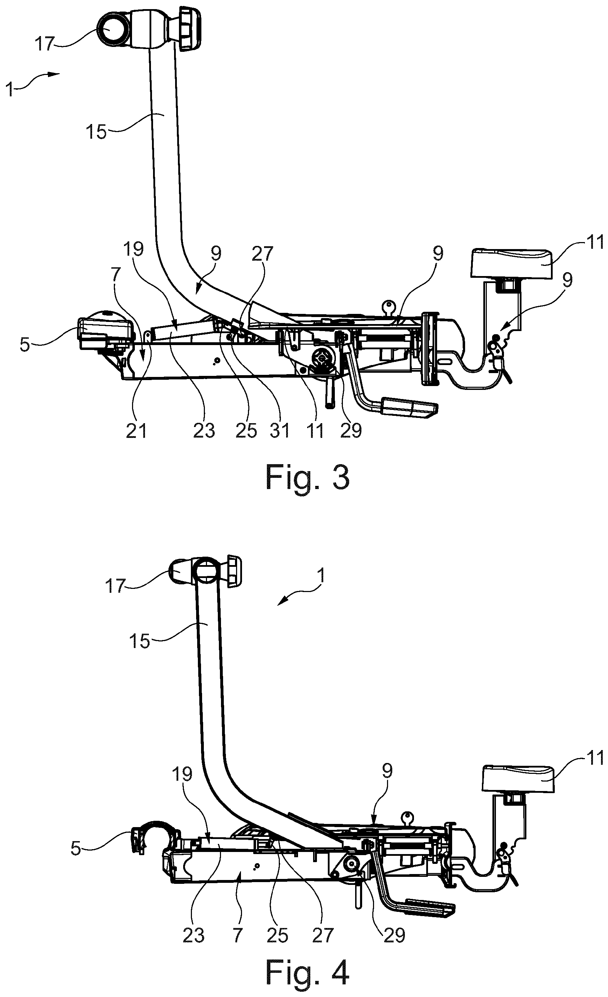

Fig. 3 zeigt eine Seitenansicht des Lastenheckträgers 1 in einem unbeladenen Zustand, wobei das Schaltelement 27 in der dritten Schaltstellung und damit in einer Schaltstellung für eine Beladung mit drei Fahrrädern ist. Fig. 4 zeigt eine Schnittansicht des Lastenheckträgers 1 in einem unbeladenen Zustand, wobei das Schaltelement 27 in der zweiten Schalterstellung und damit in der Schalterstellung für eine Beladung mit zwei Fahrrädern ist. Das Umschalten zwischen den drei Schaltstellungen des Schaltelements 27 erfolgt durch einen Handhebel, welcher an dem Schaltelement 27 ausgebildet ist. Konkret wird durch ein Rotieren des Schaltelements 27 mittels des Handhebels um eine Schaltelementachse 31 zwischen den drei Schaltstellungen geschalten. Der Handhebel kann als Bestandteil der Unterstützungskraftveränderungsvorrichtung betrachtet werden.

Fig. 5 zeigt eine vergrößerte Ansicht des Basiselements 7 mit der Gasdruckfeder 19 in einem ausgelenkten/ ausgefahrenen Zustand. Die Gasdruckfeder 19 ist in dem ersten Lagerblock 21 über das Druckrohr 23 schwenkbar gelagert. Weiterhin ist die Gasdruckfeder 19 über die Kolbenstange 25 schwenkbar an der Stützstange 15 des Trägerelements 9 über das Schaltelement 27 gelagert. Bei einer Relativbewegung zwischen dem Basiselement 7 und dem Trägerelement 9 fährt die Kolbenstange 25 in das Druckrohr 23 ein bzw. aus und die Schwenkbewegung wird unterstützt.

Fig. 6 zeigt den offenbarungsgemäßen Lastenheckträger 1 in einem beladenen Zustand mit einem Fahrrad 33. Die Laufräder des Fahrrads 33 sind in/auf der Auflageplattform 11 des Trägerelements neun positioniert. Ein Rahmen 35 des Fahrrads 33 kann über die Stabilisierungssteine 17 an der Stützstange 15 fixiert werden. Wenn der Lastenheckträger 1 in dem hier dargestellten abgeklappten Zustand ist, kann der Benutzer den Kofferraum des Fahrzeugs einfach erreichen. Durch die Gasdruckfeder 19 wird die Schwenkbewegung zwischen dem Trägerelement 9 und dem Basiselement 7 unterstützt, wobei in dem hier dargestellten Zustand mit dem einen Fahrrad das Schaltelement 27 derart geschalten ist, dass der Hebelarm zwischen dem Angriffspunkt der Gasdruckfeder 19 an dem Trägerelement 9 bzw. an der Stoßstange 15 des Trägerelements 9 klein ist. Daraus resultierte eine auf den Beladungszustand angepasste geringe Unterstützungswirkung der Gasdruckfeder 19.

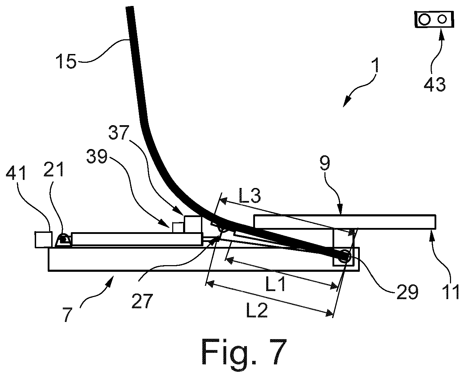

Fig. 7 zeigt einen offenbarungsgemäßen Lastenheckträger 1 in einer weiteren Ausführungsform. Nachfolgend wird lediglich auf Unterschiede der weiteren Ausführungsform eingegangen, um Doppelungen zu vermeiden.

Der Lastenheckträger 1 ist mit einem Motor 37 ausgebildet, das Trägerelement 9 gegen das Basiselement 7 aktiv zu verkippen. Der Motor 37 wird durch die Ansteuerungsvorrichtung 39 angesteuert. Die Ansteuerungsvorrichtung empfängt ein externes Abklappsignal. Das Abklappsignal kann ein Signal einer Funkfernbedienung 43 sein. Alternativ kann das Abklappsignal ein von einem Sensor 41 emittiertes Signal sein. Der Sensor 41 detektiert ein Öffnen der Heckklappe des Fahrzeugs. Bei dem Sensor 41 kann es sich beispielsweise um einen Annäherungssensor handeln. Durch das Abklappen des Trägerelements 9 gegen das Basiselement 7 kann eine Kollision zwischen der Heckklappe und dem Lastenheckträger 1 verhindert werden.

### Bezugszeichenliste

- 1: Lastenheckträger
- 3: Kugelkopf-Anhängerkupplung
- 5: Kupplung
- 7: Basiselement
- 9: Trägerelement/ Transportelement/ Schwenkelement
- 11: Auflageplattform/ Transportflächenflügel
- 13: Rastschlaufe/ Lastsicherungseinheit
- 15: Stützstange
- 17: Stabilisierungsstande
- 19: Gasdruckfeder
- 21: erster Lagerblock
- 23: Druckrohr
- 25: Kolbenstange
- 27: Schaltelement
- 29: Schwenkachse/ Drehpunkt
- 31: Schaltelementachse
- 33: Fahrrad
- 35: (Fahrrad-) Rahmen
- 37: Motor
- 39: Ansteuerungsvorrichtung
- 41: Sensor
- 43: Funkfernbedienung
- L1: kleinster Abstand
- L2: mittlerer Abstand
- L3: größter Abstand

## Patentansprüche

1. Lastenheckträger (1) mit
einem Basiselement (7),
einer zum Koppeln mit einer Kugelkopf-Anhängerkupplung eines Fahrzeugs vorgesehenen Kupplung (5), welche starr an dem Basiselement (7) ausgebildet ist, und
einem Trägerelement (9) zum Aufnehmen zumindest einer Last, vorzugsweise eines Fahrrads (33), wobei das Trägerelement (9) und das Basiselement (7) schwenkbar um einen Drehpunkt (29) miteinander verbunden sind und zwischen dem Basiselement (7) und dem Trägerelement (9) zumindest ein Unterstützungselement (19) ausgebildet ist, um eine Bewegung zwischen dem Basiselement (7) und dem Trägerelement (9) zu unterstützen,
einer Unterstützungskraftveränderungsvorrichtung (27), welche ausgebildet ist, eine Unterstützungswirkung des Unterstützungselements (19) auf die Bewegung zwischen dem Basiselement (7) und dem Trägerelement (9) zu verändern, **dadurch gekennzeichnet, dass** die Unterstützungskraftveränderungsvorrichtung (27) mit einer Handhebelvorrichtung ausgebildet ist, einen Angriffspunkt des Unterstützungselements (19) durch Klappen eines schwenkbaren Elements der Handhebelvorrichtung an dem Trägerelement (9) in seiner Position zu verändern, und das schwenkbare Element in eine erste plane Position, eine aufgerichtete Position und eine zweite plane Position bringbar ist, wobei jede der Positionen in einem unterschiedlichen Hebelarm und damit einer unterschiedlichen Unterstützungswirkung resultiert.

2. Lastenheckträger (1) nach Anspruch 1, **dadurch gekennzeichnet, dass** die Unterstützungskraftveränderungsvorrichtung (27) dazu ausgebildet ist, den Abstand (L1, L2, L3) über die eiτwHandhebelvorrichtung in drei Stufen, zu verändern, wobei die Stufen unterschiedlichen Beladungszuständen des Trägerelements (9) entsprechen.

3. Lastenheckträger (1) nach einem der Ansprüche 1 oder 2, **dadurch gekennzeichnet, dass** das Unterstützungselement (19) eine Gasdruckfeder ist.

4. Lastenheckträger (1) nach einem der Ansprüche 1 bis 3, **dadurch gekennzeichnet, dass** es sich bei dem Lastenheckträger (1) um einen Fahrradheckträger handelt und die Unterstützungswirkung des Unterstützungselements (19) in Abhängigkeit von einer Anzahl an auf dem Trägerelement (9) des Fahrradheckträgers aufgenommenen Fahrrädern über die Unterstützungskraftveränderungsvorrichtung (27) einstellbar ist.

5. Lastenheckträger (1) nach einem der Ansprüche 1 bis 4, **dadurch gekennzeichnet, dass** der Lastenheckträger (1) eine Ansteuerungsvorrichtung (39) aufweist, wobei die Ansteuerungsvorrichtung (39) vorgesehen und ausgebildet ist, die Bewegung zwischen dem Trägerelement (9) und dem Basiselement (7) in Abhängigkeit eines, vorzugsweise externen, Signals zu bewirken.

6. Lastenheckträger (1) nach Anspruch 5, **dadurch gekennzeichnet, dass** der Lastenheckträger (1) einen Motor (37) aufweist, welcher die Bewegung zwischen dem Trägerelement (9) und dem Basiselement (7) aktiv bewirkt und von der Ansteuerungsvorrichtung (39) angesteuert wird.

7. Lastenheckträger (1) nach Anspruch 5 oder 6, **dadurch gekennzeichnet, dass** der Lastenheckträger (1) einen Sensor (41) aufweist, wobei der Sensor vorgesehen und ausgebildet ist, eine Bewegung, insbesondere ein Öffnen, einer Heckklappe des Fahrzeugs zu detektieren.

8. System aus einem Lastenheckträger (1) nach einem der Ansprüche 5 bis 7 und einer Funkfernbedienung (43), vorzugsweise der Funkfernbedienung (43) des Fahrzeugs, **dadurch gekennzeichnet, dass** das Signal ein Signal zum Öffnen der Heckklappe des Fahrzeugs ist.

## Claims

1. Rear load carrier (1) comprising
a base element (7),
a coupling (5) designed to connect to a ball-type trailer hitch of a vehicle, which is rigidly formed on the base element (7), and
a carrier element (9) for receiving at least one load, preferably a bicycle (33), wherein the carrier element (9) and the base element (7) are pivotally connected to one another about a pivot point (29) and at least one support element (19) is formed between the base element (7) and the carrier element (9) to assist movement between the base element (7) and the carrier element (9),
a support force modification device (27) configured to alter the supporting effect of the support element (19) on the movement between the base element (7) and the carrier element (9), **characterized in that** the support force modification device (27) is configured with a hand lever device to change the position of a point of application of the support element (19) on the carrier element (9) by flipping a pivotable element of the hand lever device, and the pivotable element is moveable into a first horizontal position, an upright position, and a second horizontal position, wherein each of the positions results in a different lever arm and thus a different supporting effect.

2. The rear load carrier (1) according to claim 1, **characterized in that** the support force modification device (27) is designed to alter the distance (L1, L2, L3) in three steps via the hand lever device, the steps corresponding to different loading conditions of the carrier element (9).

3. The rear load carrier (1) according to any of claims 1 or 2, **characterized in that** the support element (19) is a gas spring.

4. The rear load carrier (1) according to any of claims 1 to 3, **characterized in that** the rear load carrier (1) is a rear-mounted bicycle carrier and the supporting effect of the support element (19) is adjustable via the support force modification device (27) depending on the number of bicycles mounted on the carrier element (9) of the rear-mounted bicycle carrier.

5. The rear load carrier (1) according to any of claims 1 to 4, **characterized in that** the rear load carrier (1) comprises a control device (39), wherein the control device (39) is provided and configured to cause movement between the carrier element (9) and the base element (7) in response to a signal, preferably an external one.

6. The rear load carrier (1) according to claim 5, **characterized in that** the rear load carrier (1) includes a motor (37) that actively drives the movement between the carrier element (9) and the base element (7) and is controlled by the control device (39).

7. The rear load carrier (1) according to claim 5 or 6, **characterized in that** the rear load carrier (1) includes a sensor (41), the sensor being designed and configured to detect movement, in particular the opening, of the vehicle's tailgate.

8. System comprising a rear load carrier (1) according to any of claims 5 to 7, and a radio remote control (43), preferably the vehicle's radio remote control (43), **characterized in that** the signal is a signal for opening the vehicle's tailgate.

## Revendications

1. Support arrière de charge (1) avec
un élément de base (7),
un accouplement (5) prévu pour le couplage à un attelage de remorque à tête sphérique d'un véhicule, accouplement qui est conçu de manière rigide au niveau de l'élément de base (7) et
un élément de support (9) pour la réception d'au moins une charge, de préférence d'une bicyclette (33), dans lequel l'élément de support (9) et l'élément de base (7) sont reliés de manière pivotante l'un à l'autre autour d'un point de rotation (29) et au moins un élément d'appui (19) est conçu entre l'élément de base (7) et l'élément de support (9) afin de soutenir un mouvement entre l'élément de base (7) et l'élément de support (9),
un dispositif de modification de force d'appui (27) qui est conçu afin de modifier une action d'appui de l'élément d'appui (19) lors du mouvement entre l'élément de base (7) et l'élément de support (9), **caractérisé en ce que** le dispositif de modification de force d'appui (27) est conçu avec un dispositif de levier à main pour changer la position d'un point d'engagement de l'élément d'appui (19) en rabattant un élément pivotant du dispositif de levier à main au niveau de l'élément de support (9), et l'élément pivotant peut être amené dans une première position plane, une position redressée et une seconde position plane, dans lequel chacune des positions résulte en un bras de levier différent et ainsi une action d'appui différente.

2. Support arrière de charge (1) selon la revendication 1, **caractérisé en ce que** le dispositif de modification de force d'appui (27) est conçu afin de modifier la distance (L1, L2, L3) en trois étapes par le biais du dispositif de levier à main, dans lequel les étapes correspondent à différents états de charge de l'élément de support (9).

3. Support arrière de charge (1) selon l'une quelconque des revendications 1 ou 2, **caractérisé en ce que** l'élément d'appui (19) est un ressort pneumatique.

4. Support arrière de charge (1) selon l'une quelconque des revendications 1 à 3, **caractérisé en ce que** le support arrière de charge (1) est un support arrière de bicyclette, et l'action d'appui de l'élément d'appui (19) est réglable en fonction d'un nombre de bicyclettes reçues sur l'élément de support (9) du support arrière de charge par le biais du dispositif de modification de force d'appui (27).

5. Support arrière de charge (1) selon l'une quelconque des revendications 1 à 4, **caractérisé en ce que** le support arrière de charge (1) présente un dispositif de commande (39), dans lequel le dispositif de commande (39) est prévu et conçu afin de provoquer le mouvement entre l'élément de support (9) et l'élément de base (7) en fonction d'un signal de préférence externe.

6. Support arrière de charge (1) selon la revendication 5, **caractérisé en ce que** le support arrière de charge (1) présente un moteur (37) qui provoque activement le mouvement entre l'élément de support (9) et l'élément de base (7) et est commandé par le dispositif de commande (39).

7. Support arrière de charge (1) selon la revendication 5 ou 6, **caractérisé en ce que** le support arrière de charge (1) présente un capteur (41), dans lequel le capteur est prévu et conçu afin de détecter un mouvement, en particulier une ouverture, d'un hayon du véhicule.

8. Système composé d'un support arrière de charge (1) selon l'une quelconque des revendications 5 à 7 et d'une télécommande radio (43), de préférence la télécommande radio (43) du véhicule, **caractérisé en ce que** le signal est un signal d'ouverture du hayon du véhicule.
